# EUROPEAN PATENT APPLICATION

(11) **EP 2 835 649 A1**
(43) Date of publication of application: **11.02.2015**
(21) Application number: 13772285.6
(22) Date of filing: 29.03.2013
(51) Int. Cl.: G01N 35/00

(54) **AUTOMATIC ANALYSIS DEVICE**

(30) Priority: 06.04.2012 JP 2012087789
(71) Applicant: Hitachi High-Technologies Corporation, Tokyo 105-8717 (JP)
(72) Inventor: NAKASAWA Takashi, Minato-ku, Tokyo 105-8717 (JP); SUZUKI Yoshihiro, Minato-ku, Tokyo 105-8717 (JP); ARUGA Yoichi, Minato-ku, Tokyo 105-8717 (JP)
(74) Representative: Calderbank, Thomas Roger
(86) International application number: PCT/JP2013/059581
(87) International publication number: WO 2013/150978

(57) **Abstract**

Provided is an automatic analyzer capable of performing measurements efficiently. The automatic analyzer comprises: a first reagent disk 7 on which reagent packs each storing a reagent to be used for a reaction are placed; a second reagent disk 16; and a reagent pack transfer mechanism 17 which transfers the reagent packs between the first reagent disk and the second reagent disk. A judgment unit 20A and a drive control unit 20B of a computer 20 operate to transfer a reagent pack that has been placed on the second reagent disk 16 to the first reagent disk 7 using the reagent pack transfer mechanism 17, perform at least quality control measurement out of the calibration and the quality control measurement with the reagent stored in the reagent pack transferred to the first reagent disk 7, and thereafter return the reagent pack to the second reagent disk 16 using the reagent pack transfer mechanism 17.

## Description

### Technical Field

The present invention relates to an automatic analyzer for clinical examinations for conducting qualitative/quantitative analyses of biological samples such as blood and urine, and in particular to an automatic analyzer having a function of automatically feeding samples or reagents necessary for measurements into the analyzer.

### Background Art

An analyzer for clinical examinations conducts measurements of particular substances contained in a biological sample including blood and urine. Such an analyzer generally works in the following manners: First, a sample is dispensed by a sample nozzle from a sample vessel to a reaction vessel. Second, a reagent is dispensed by a reagent nozzle from a reagent pack to the reaction vessel to which the sample has been dispensed. The mixture of the sample and the reagent is then stirred. Third, the reaction in the reaction vessel is continued for a certain period before the concentration of an intended analysis item (analytical assay) is calculated based on information obtained from the reaction solution, the information including absorbance and amount of luminescence. The reagent to be used for the measurement should be filled into the reagent pack up to a prescribed volume. And the used reagent pack should be discarded or reused by refilling the vessel with a new reagent. In recent years a lot of efforts have been made to prevent medical malpractice such as errors in filling a reagent pack with a correct reagent and erroneous measurements attributed to setting (misplacing) a reagent pack for a different analysis item at the position where the reagent pack are supposed to be placed. From this viewpoint, the operation of the analyzers has been improved by managing each reagent pack using a traceable identifier e.g. bar code and discarding used reagent packs without refilling the vessel with the reagent so as to reduce the degradation of the reagent to the minimum.

The reagents used for the analysis by an analyzer are generally managed as follows: After the measurements planned for the day are completed, the amount of each reagent necessary for the measurement till the analysis end time of the next day is calculated by the analyzer's operator himself/herself, and the calculated amount of reagents is set in the analyzer. Since multiple types of reagents could be used per analysis item, the operator's work of checking deficient reagents, taking out necessary reagents from the refrigerator and setting the reagents in the analyzer could take more than an hour. Moreover, in order to actually use each of the replaced reagent packs for the examination, it is necessary to create a calibration curve for each reagent pack and check whether the examination is possible with the reagent in each reagent pack using an evaluated sample such as quality control sample. Hence, the reagent replacement is an extremely troublesome work in the present circumstances.

In recent years a single automatic analyzer is often used day and night. Yet as the operator using the analyzer at the night work is not always the person in charge of the automatic analyzer, it is common that the reagent replacement and other works for maintaining the analyzer are all undertaken by the day shift workers in charge of the analyzer. In the twenty-four hour operation, when the maintenance work takes time longer than expected, the subsequent examinations may be delayed correspondingly. Therefore, it has been requested to reduce the need of time-consuming maintenance works such as reagent replacement as much as possible.

One of known solutions for reducing the maintenance work for reagent replacement is a method (see Patent Literature 1 for example) in which a new reagent pack is set in advance in a preliminary reagent storage room and the analyzer transfers the new reagent pack to a reagent storage room when necessary, while returning a used reagent pack to the preliminary reagent storage room. Such an analyzer, determining and loading necessary reagents in the analyzer as needed and returning used reagent packs to the preliminary reagent storage room, is highly useful in terms of the reduction of the reagent replacement work.

### Prior Art Literature

### Patent Literature

Patent Literature 1: JP-2010-85249-A

### Summary of the Invention

### Problem to be Solved by the Invention

Today, the number of workers at clinical sites such as clinical laboratory technologists is kept at a minimum in the movement to reduce the medical expense. Each technologist has their hands full with being in charge of multiple tasks including analyzer maintenance, reagent replacement, calibration curve management and quality control. Therefore, it has been requested to reduce the number of maintenance tasks that have to be carried out by the operator himself/herself before the examination/measurement.

In the method described in the Patent Literature 1, the replacement reagent is temporarily stored in a preliminarily cooled room. The reagent pack is transferred to the position to be used by the analyzer as needed. The reagent pack after being used is returned to the same position as that of the replacement reagent. The analyzer determining and loading necessary reagents in the analyzer as needed and returning used reagent packs is highly useful in terms of the reduction of the reagent replacement work.

Meanwhile, before clinical examination is performed using the newly set reagent, it is necessary to create a calibration curve with the reagent and perform quality control using a quality control sample in order to guarantee the accuracy of the measurement performed with the newly set reagent. Therefore, just setting the new reagent is not enough for immediately restarting the analysis when the currently used reagent is used up in the middle of a laboratory test. Thus, in order to perform clinical examinations with a new reagent, it is necessary to stop the analyzing operation of the automatic analyzer and then perform the calibration and the quality control before starting the examination. The calibration and the quality control take more than ten minutes. Since the measurement cannot be performed during this period, the measurement efficiency accordingly drops.

It is therefore the primary object of the present invention to provide an automatic analyzer capable of performing measurements efficiently.

### Means for Solving the Problem

To achieve the above object, the present invention provides an automatic analyzer comprising: a sample disk on which sample vessels each storing a sample to be analyzed, a standard solution or a quality control sample are placed; a first reagent disk on which reagent packs each storing a reagent to be used for a reaction are placed; a reaction disk on which reaction vessels, in each of which a sample dispensed from a reagent pack on the reagent disk is reacted with a reagent dispensed from a reagent pack on the first reagent disk, are placed; a photometer which detects light that has passed through the reaction vessel; a second reagent disk which is provided separately from the first reagent disk and on which reagent packs each storing a reagent to be used for a reaction are placed; and a reagent pack transfer mechanism which transfers the reagent packs between the first reagent disk and the second reagent disk, the automatic analyzer performing calibration with a reagent stored in a reagent pack transferred to the first reagent disk and the standard solution and performing quality control measurement with a reagent stored in a reagent pack transferred to the first reagent disk and the quality control sample. The automatic analyzer comprises a calculation/control unit which opens a reagent pack that has been placed on the second reagent disk and then transfers the reagent pack to the first reagent disk using the reagent pack transfer mechanism, performs at least the quality control measurement, out of the calibration and the quality control measurement, with the reagent stored in the reagent pack transferred to the first reagent disk, and thereafter returns the reagent pack to the second reagent disk using the reagent pack transfer mechanism.

These configuration makes it possible to perform the measurement efficiently.

### Advantage of the Invention

The present invention enables the measurement in automatic analyzers to be performed efficiently.

### Brief Description of the Drawings

Fig. 1 is a block diagram showing the overall configuration of an automatic analyzer for clinical examinations in accordance with an embodiment of the present invention.
Fig. 2 is a block diagram showing the configuration of a control/calculation system in the automatic analyzer for clinical examinations in accordance with an embodiment of the present invention.
Fig. 3 is a flow chart showing a concrete example of reagent operation using first and second reagent disks in the automatic analyzer for clinical examinations in accordance with an embodiment of the present invention.
Fig. 4 is a flow chart showing a concrete example of the reagent operation using the first and second reagent disks in the automatic analyzer for clinical examinations in accordance with an embodiment of the present invention.
Fig. 5 is a flow chart showing a concrete example of the reagent operation using the first and second reagent disks in the automatic analyzer for clinical examinations in accordance with an embodiment of the present invention.
Fig. 6 is a flow chart showing a concrete example of the reagent operation using the first and second reagent disks in the automatic analyzer for clinical examinations in accordance with an embodiment of the present invention.

### Mode for Carrying out the Invention

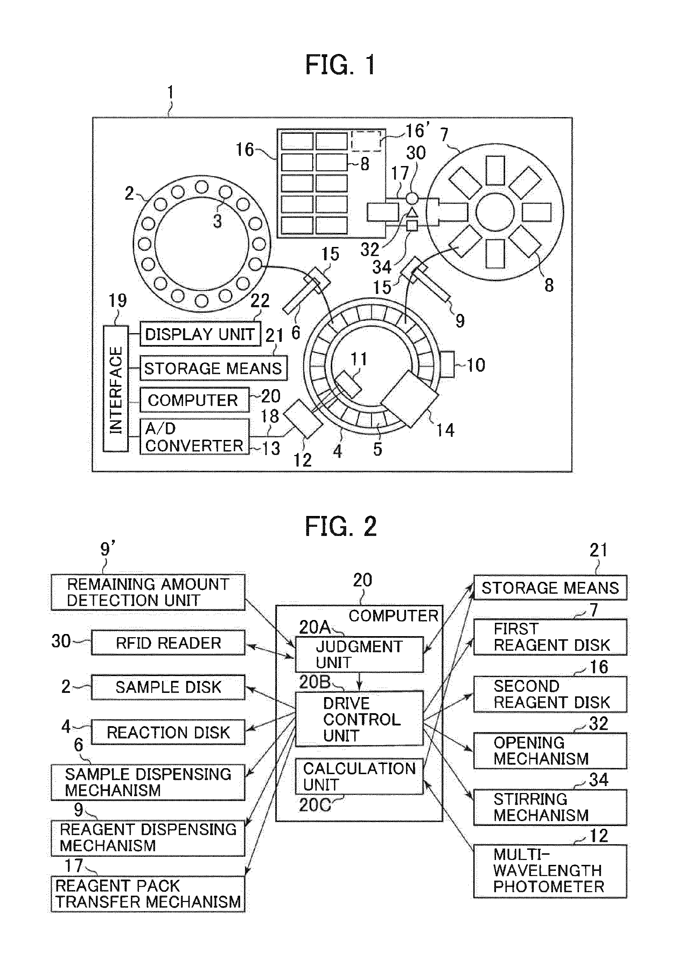

The configuration and the operation of an automatic analyzer for clinical examination in accordance with an embodiment of the present invention will be described below with reference to Figs. 1 to 6.

The overall configuration of the automatic analyzer for clinical examination in accordance with the present embodiment will first be explained with reference to Fig. 1.

Fig. 1 is a block diagram showing the overall configuration of the automatic analyzer for clinical examination in accordance with an embodiment of the present invention. In Fig. 1, a conceptual diagram of a control system is added to a top view layout of the principal part of the automatic analyzer.

The automatic analyzer as the target of the present invention is equipped with a mechanism for taking in a prescribed amount of liquid such as sample and reagent using a dispensing nozzle. While the following explanation will be given with an example of an automatic analyzer for clinical examination for conducting qualitative/quantitative analyses of biological samples such as blood and urine, the present invention is not to be restricted to such analyzers. For example, a rack system for loading sample vessels into an analysis unit using a sample rack and a robot handling system for transferring reagent packs may be employed.

The automatic analyzer 1 includes a sample disk 2, sample vessels 3 arranged on the sample disk 2 concentrically with the sample disk 2, a reaction disk 4, reaction vessels 5, a sample dispensing mechanism 6, a first reagent disk 7, reagent packs 8 storing various reagents, a reagent dispensing mechanism 9, a stirring mechanism 10, a light source 11, a photometer (multi-wavelength photometer) 12, an A/D converter 13, a reaction vessel cleaning mechanism 14, dispensing nozzle cleaning mechanisms 15, a second reagent disk 16, a reagent pack transfer mechanism 17, an interface 19, a computer 20, storage means 21, a display unit 22, an opening mechanism 30, an RFID reader 32, and a stirring mechanism 34. The reaction vessels 5 are arranged at even intervals in the circumferential direction of the reaction disk 4. The reagent packs 8 on the first reagent disk 7 are arranged at even intervals in the circumferential direction of the first reagent disk 7. On the second reagent disk 16 the reagent packs 8 are arranged in a matrix at even intervals.

The opening mechanism 30 opens each reagent pack 8 transferred by the reagent pack transfer mechanism 17 if the reagent pack 8 has not been opened yet. The method of opening the reagent pack 8 can be removing a cap from the top of the reagent pack 8 or making a hole through a sealing part at the top of the reagent pack 8. The RFID reader 32 reads out reagent information regarding the reagent stored in each reagent pack 8 from an RFID tag attached to the reagent pack 8 transferred by the reagent pack transfer mechanism 17. The reagent information includes reagent name, reagent quantity, reagent expiration date, and lot number. The RFID reader 32 is also capable of writing information to the RFID tag. The information written to the RFID tag can include, for example, an open flag ("opened" flag) which is turned ON when the opening of the reagent pack 8 is completed by the opening mechanism 30. It is also possible to write the time of the opening (opening time) to the RFID tag. The stirring mechanism 34 is used for stirring the reagent in the reagent pack. This is because the distribution of a reagent that has been left out for a long time in a reagent pack can have become nonuniform due to precipitation or the like. The stirring is performed by vibrating the reagent pack, for example.

The first reagent disk 7 can have a number of (e.g., 60) reagent packs 8 placed thereon. The reagent packs 8 placed on the first reagent disk 7 are in the same shape but can differ in the capacity. The reagent packs 8 store reagents to be used for various analysis items. However, when the remaining amount of a reagent for a certain analysis item in a first reagent pack 8 is small, a second reagent pack 8 storing the reagent for the same analysis item may be held on the reagent disk 7. In general, the number of reagents used for one analysis item is one in biochemical analysis and two in immunity analysis.

The first reagent disk 7 is rotated by a motor or the like. At a position where the reagent pack transfer mechanism 17 and the first reagent disk 7 adjoin each other, the reagent pack transfer mechanism 17 is capable of setting a reagent pack, transferred from the second reagent disk 16, on the first reagent disk 7. Thus, each reagent pack can be set at an intended position on the first reagent disk 7 by rotating the first reagent disk 7. The reagent pack transfer mechanism 17 is also capable of taking hold of a reagent pack 8 placed on the first reagent disk 7 and transferring the reagent pack 8 to the second reagent disk 16. Thus, a reagent pack at an intended position on the first reagent disk 7 can be transferred to the second reagent disk 16 by rotating the first reagent disk 7.

The second reagent disk 16 can have a number of (e.g., 100) reagent packs 8 placed thereon. The second reagent disk 16 is capable of moving a plurality of reagent packs 8 in a plane and moving each reagent pack 8 to the vicinity of the reagent pack transfer mechanism 17.

The operator of the automatic analyzer places new reagent packs 8 on the second reagent disk 16. Each reagent pack 8 set by the operator is moved to the vicinity of the reagent pack transfer mechanism 17 and is transferred by the reagent pack transfer mechanism 17 to the first reagent disk 7. The calibration and the quality control are performed on the reagent in the reagent pack 8 transferred to the first reagent disk 7. After the calibration and the quality control are performed, if the remaining amount of the same type of reagent that has been placed on the first reagent disk 7 is large enough, the reagent pack 8 is returned to the second reagent disk 16 by the reagent pack transfer mechanism 17. It is not essential to perform both the calibration and the quality control on the reagent in the new reagent pack. For example, when the quality control is tentatively performed using a calibration curve created for the old reagent and the result of the quality control is excellent, the calibration for the new reagent is not performed and the calibration curve for the old reagent continues to be used for the new reagent.

When the remaining amount reaches zero in a reagent pack that has been placed on the first reagent disk 7, the reagent pack is returned to the second reagent disk 16 by the reagent pack transfer mechanism 17. The second reagent disk 16 has a waste inlet 16'. The second reagent disk 16 moves the reagent pack whose remaining amount is zero to the waste inlet 16' and discards the reagent pack downward through the waste inlet 16'.

The sample disk 2 can have a number of (e.g., 100) vessels placed thereon. Among the vessels placed on the sample disk 2, two vessels are standard solution vessels storing first and second standard solutions for biochemical analysis each. The first and second standard solutions each contain components of different concentrations for the same analysis items. At the time of the calibration, the computer 20 creates the calibration curve by connecting a first measurement value and a second measurement value by a straight line. The first measurement value is obtained by the photometer 12 from the first standard solution in regard to a first analysis item. The second measurement value is obtained by the photometer 12 from the second standard solution in regard to the first analysis item. Moreover, the first standard solution contains not only components for the first analysis item but also those for another analysis item in a first concentration. And the second standard solution contains not only components for the first analysis item but also those for another analysis item in a second concentration. As above, in the case of biochemical analysis, the number of standard solutions of the multi-calibrator capable of calibration of multiple analysis items is two. However, in the case of immunity analysis, the number of standard solutions necessary for one analysis item is three or more. In addition, three or more standard solutions are necessary for each analysis item. The calibration curve created in this process can either be a straight line or a curved line.

The vessels placed on the sample disk 2 further include a quality control sample vessel for biochemical analysis storing one quality control sample. The quality control sample contains the component for the first analysis item in a known concentration, for example. Therefore, if the measurement is performed on the quality control sample and the difference between the result of the measurement and the known concentration value is small, it can be determined that high accuracy of the analyzer has been maintained. The quality control sample further contains a component for another analysis item other than the first analysis item in a known concentration. Thus, quality control regarding two or more analysis items is possible using only one quality control sample. There are also cases where the precision of the quality control is enhanced by, for example, setting two types of quality control samples prepared by different manufacturers on the sample disk 2 and performing the analysis on both of the quality control samples. It is also possible to properly make a selection from two types of quality control samples.

The flow of the analyzing process by the automatic analyzer 1 will next be explained below.

First, the sample dispensing mechanism 6 dispenses an assay sample from a sample vessel 3 to a reaction vessel 5. Second, the reagent dispensing mechanism 9 dispenses a reagent to be used for the analysis from a reagent pack 8 to the reaction vessel 5. Third, the stirring mechanism 10 stirs the liquid mixture of the assay sample and the reagent. The reaction disk 4 has a constant temperature chamber. The reaction vessel 5 is set inside the constant temperature chamber. The stirred liquid mixture is held at the temperature of the constant temperature chamber for a certain period, during which the reaction in the liquid mixture proceeds. After the certain period has elapsed, light emitted from the light source 11 and passing through the reaction vessel 5 storing the liquid mixture is detected and measured by the photometer (multi-wavelength photometer) 12. The measurement by the photometer 12 is transmitted to the interface 19 via the A/D converter 13. The computer 20 includes a calculation unit. A result obtained from the calculation of the calculation unit is stored in the storage means 21 and is output to an information device at the same time (e.g. displayed on the display unit 22).

At positions on the first reagent disk 7 where no reagent pack has been set, new reagent packs 8 from the second reagent disk 16 can be set by the reagent pack transfer mechanism 17 as needed. When a reagent pack 8 is unnecessary or the remaining amount of a reagent in a reagent pack 8 has reached zero and the reagent pack 8 should be discarded, the reagent pack is transferred to the second reagent disk 16 by the reagent pack transfer mechanism 17.

Each of the dispensing nozzle cleaning mechanisms 15 arranged as two positions cleans the tip end of the dispensing nozzle every time a sample or a reagent is dispensed by the sample dispensing mechanism 6 or the reagent dispensing mechanism 9. Each reaction vessel 5 which has been used for the reaction is cleaned by the reaction vessel cleaning mechanism 14 and is used again for the next reaction. All of these moving mechanisms of the analyzer are controlled by a drive control unit of the computer 20 via the interface 19 and communication means 18.

The above-described transfer of the reagent from the first reagent disk 7 to the second reagent disk 16 will be explained in more detail below. The operator can freely take a reagent pack into or out from the second reagent disk 16 irrespective of the status of the analyzer (whether the analyzer is in the middle of analysis or on standby). A reagent pack newly put into the second reagent disk 16 is transferred to the first reagent disk 7 by the reagent pack transfer mechanism 17 at a time specified by the operator in the computer 20 including the drive control unit or under conditions where no analysis has been performed for a certain period. Then, the reagent pack is set at a vacant position on the first reagent disk 7 and goes through necessary calibration and/or quality control. As mentioned above, there are cases where the calibration and the quality control are both performed and cases where only the quality control is performed with no calibration. After the above processing, if the reagent in the reagent pack will not be used immediately, the reagent pack is returned to the second reagent disk 16 by the reagent pack transfer mechanism 17 and stays on standby until the reagent is used for analysis. When the remaining amount of a reagent pack held on the first reagent disk 7 reaches zero, the reagent pack is transferred to the second reagent disk 16 by the reagent pack transfer mechanism 17 and discarded through the waste inlet 16'. Meanwhile, a reagent pack which has gone through the calibration and the quality control and been temporarily returned to the second reagent disk 16 is transferred to a vacant space on the first reagent disk 7 by the reagent pack transfer mechanism 17. Since the calibration and the quality control have already been performed on the reagent in the new reagent pack transferred to the first reagent disk 7, starting the measurement is possible immediately after the reagent pack is transferred to the first reagent disk 7. Specifically, when a reagent pack has to be replaced in the conventional analyzer, the analyzer is stopped temporarily, a new reagent pack is transferred to the first reagent disk, and thereafter the calibration and the quality control are performed while stopping the analyzer, which was waste of time. In contrast, the automatic analyzer according to the present embodiment is capable of performing the measurement efficiently by eliminating such waste of time. Incidentally, even when the remaining amount of a reagent pack is not zero e.g. at the time the reagent has expired, the reagent pack can be discarded according to an instruction of the operator.

The configuration of a control/calculation system of the automatic analyzer for clinical examination according to the present embodiment will next be explained below with reference to Fig. 2.

Fig. 2 is a block diagram showing the configuration of the control/calculation system in the automatic analyzer for clinical examination in accordance with an embodiment of the present invention. In Fig. 2, each reference character identical with that in Fig. 1 represents the same component as in Fig. 1.

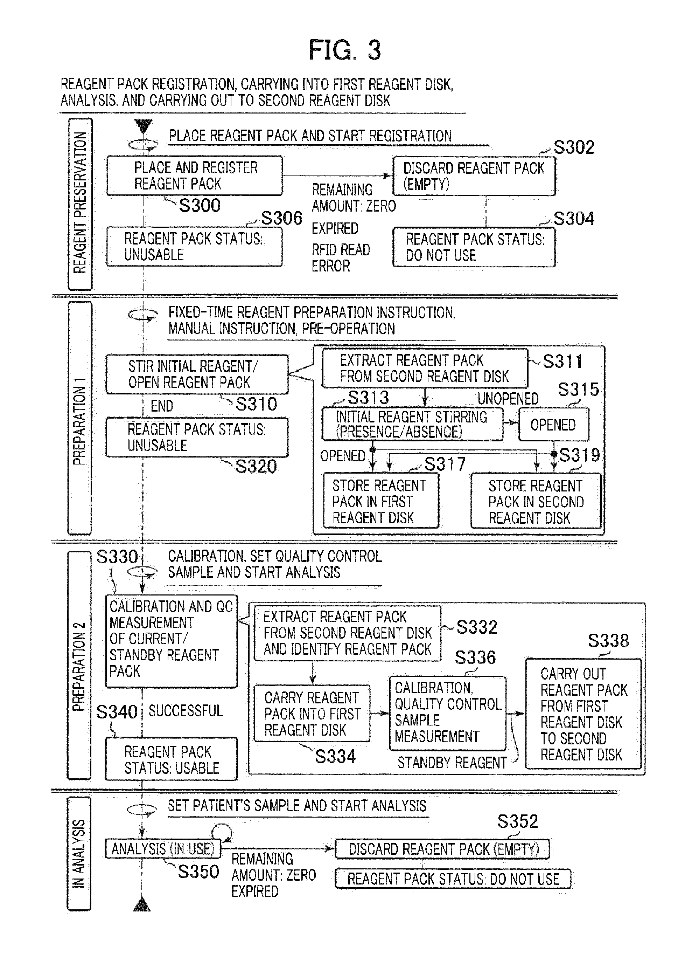

The computer 20 includes a judgment unit 20A, a drive control unit 20B and a calculation unit 20C. The judgment unit 20A acquires information on the remaining amount of the reagent in each reagent pack 8 detected by a remaining amount detection unit 9'. The remaining amount detection unit 9' includes a fluid level detector arranged in the reagent dispensing mechanism 9. The remaining amount of the reagent in the reagent pack 8 can be detected by inserting the tip end of the dispensing nozzle of the reagent dispensing mechanism 9 into the reagent pack 8 and detecting the fluid level of the reagent at this time with the fluid level detector. The judgment unit 20A receives the reagent information read out by the RFID reader 32. The judgment unit 20A also receives information stored in the storage means 21, such as information on the number of tests per day in regard to an analysis item "a" using a reagent A and the amount of the reagent necessary for performing the analysis item "a" once in the facility furnished with the automatic analyzer 1. With these pieces of information, the judgment unit 20A makes necessary determination on whether the new reagent pack which has gone through the calibration and the quality control on the first reagent disk 7 should be returned to the second reagent disk 16 or kept on the first reagent disk 7. The details of the operation of the judgment unit 20A will be explained later with reference to Figs. 3 to 6.

The drive control unit 20B controls the rotating/stopping operation of the reaction disk 4, the sample dispensing operation of the sample dispensing mechanism 6, the rotating/stopping operation of the first reagent disk 7, the reagent dispensing operation of the reagent dispensing mechanism 9, the stirring operation of the stirring mechanisms 10 and 34, the reagent pack moving operation of the second reagent disk 16, the reagent pack transferring operation of the reagent pack transfer mechanism 17, and the reagent pack opening operation of the opening mechanism 30. The details of the operation of the drive control unit 20B will also be explained later with reference to Figs. 3 to 6.

The calculation unit 20C creates the calibration curve regarding the standard solutions based on measurement values obtained from the photometer 12. The calculation unit 20C also performs the quality control regarding the quality control sample based on measurement values obtained from the photometer 12. Further, the calculation unit 20C calculates the concentration value of a sample in an unknown concentration using the calibration curve and measurement values obtained from the photometer 12. The results of the above processes are stored in the storage means 21.

A concrete example of the reagent operation using the first and second reagent disks in the automatic analyzer for clinical examination in accordance with the present embodiment will next be described below with reference to Figs. 3 to 6.

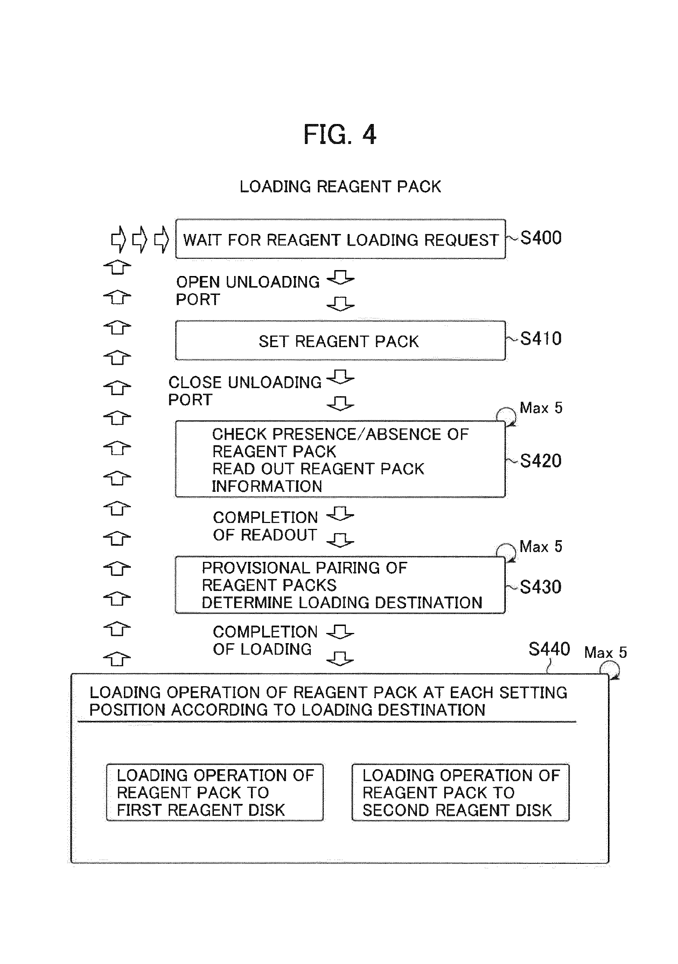

Figs. 3 to 6 are flow charts showing a concrete example of the reagent operation using the first and second reagent disks in the automatic analyzer for clinical examination in accordance with an embodiment of the present invention. Figs. 4 to 6 illustrate the details of the example shown in Fig. 2.

While the operation using two reagent disks arranged in the same automatic analyzer shown in Fig. 1 will be explained below with reference to Figs. 3 to 6, the first and second reagent disks do not necessarily have to be arranged in the same analyzer, that is, the first and second reagent disks may also be configured as separate modules in a system, for example. Although the RFID is used for identifying each reagent pack, the vessel can be identified by other means such as bar codes and IC chips.

Fig. 3 shows an operation example related to the registration of a reagent pack, the transfer of the reagent pack to the first reagent disk, the analysis, and the transfer of the reagent pack to the second reagent disk. This example includes four stages of "reagent preservation", "preparation 1", "preparation 2" and "in analysis", each of which suggests in what status the reagent pack is.

When a reagent pack is in the state of "reagent preservation" in the first step S300, the operator places a reagent to be used in the analyzer on the second reagent disk and registers the reagent pack with a GUI (Graphical User Interface) displayed on the display unit 22. The contents of the registration include the name of the reagent stored in the reagent pack, the lot number at the time of the production of the reagent, the expiration date of the reagent, and analysis parameters e.g. the amount of the reagent to be used per test.

At this stage if the remaining amount of the reagent in the reagent pack is substantially zero, the reagent has expired, or an RFID reading error occurs, the judgment unit 20A bring the reagent pack into the discarded state in step S302 and sets the status of the reagent pack to "Do not use" in step S304. Such a reagent that has run out in the reagent pack or that has expired means already used on the first reagent disk 7 and returned from the first reagent disk 7 to the second reagent disk 16.

Even when the reagent pack is not in the aforementioned "Do not use" state, the judgment unit 20A sets the status of the reagent pack to "unusable" in step S306 since the calibration and the quality control have not been performed yet right after placing the reagent pack on the second reagent disk 16.

Subsequently, when the reagent pack is in the state of "preparation 1", the reagent are stirred and the reagent pack is opened in step S310. The "preparation 1" is performed when a time specified by the operator has come (fixed-time reagent preparation instruction), when an instruction is manually input to the analyzer, or when no analysis is under way (pre-operation). The time specified by the operator can be 4 p.m., for example. The analyzing process in the daytime is usually performed between 9 a.m. and 4 p.m. and ends by 4 p.m. The analyzing process in the nighttime is performed after 5 p.m. till the next morning. An experienced operator tends to be assigned as the operator for the daytime analyzing process, while a less-experienced operator tends to be assigned as the operator for the daytime analyzing process. Thus, after the analysis in the daytime is completed at 4 p.m., the experienced operator checks and grasps the remaining amounts of all the reagents in the automatic analyzer. Since new reagent packs have already been placed on the second reagent disk 16 and registered in the "reagent preservation" stage, the "preparation 1" is performed from 4 p.m. for reagents that seem to run short by the next morning.

Specifically, in step S311, the drive control unit 20B controls the reagent pack transfer mechanism 17 and thereby takes out the reagent pack 8 from the second reagent disk 16. In step S313, the drive control unit 20B controls the stirring mechanism 34 and thereby performs the stirring of the reagent pack 8. At this point, if the reagent pack 8 is determined by the judgment unit 20A to have not been opened yet based on the information from the RFID reader 32, the information being stored in the RFID tag attached to the reagent pack 8, the drive control unit 20B controls the opening mechanism 30 and thereby opens the reagent pack (by piercing or uncapping) in step S315. Thereafter, the drive control unit 20B in step S317 controls the reagent pack transfer mechanism 17 and thereby transfers the reagent pack from the second reagent disk 16 to the first reagent disk 7. Alternatively, the drive control unit 20B in step S319 controls the reagent pack transfer mechanism 17 and thereby transfers the reagent pack from the first reagent disk 7 to the second reagent disk 16.

In this case, the reagent pack may be stirred or opened after moving the reagent pack to the first reagent disk instead of at the stage of moving the reagent pack to the first reagent disk. The reagent pack after being opened may be taken in to the second reagent disk without being taken out to the first reagent disk.

Since the reagent pack has not gone through the calibration and the quality control at this stage, the judgment unit 20A sets the status of the reagent pack to "unusable" in step S320.

Subsequently, when the reagent pack is in the state of "preparation 2", the calibration and the analysis by setting the QC (Quality Control) sample are performed on the reagent staying on standby on the first reagent disk 7 or the second reagent disk 16 in step S330. Incidentally, the calibration and the quality control sample measurement in this step may also be performed on a reagent that is already in use (current reagent).

Specifically, in step S332, the drive control unit 20B controls the reagent pack transfer mechanism 17 and thereby takes out the reagent pack 8 from the second reagent disk 16. In step S334, the drive control unit 20B has the reagent pack 8 carried into the first reagent disk 7.

Thereafter, in step S336, the calibration and the measurement of the quality control sample are performed. Specifically, at the time of the calibration, the drive control unit 20B controls the sample dispensing mechanism 6 and thereby dispenses the first standard solution to a reaction vessel 5, the solution corresponding to the reagent stored in the reagent pack 8 which has been carried in. The first standard solution, which may be at a low concentration, for example, has been stored in a sample vessel 3 held on the sample disk 2. Subsequently, the drive control unit 20B controls the reagent dispensing mechanism 9 and thereby dispenses a prescribed amount of the reagent from the reagent pack 8 to the reaction vessel to which the first standard solution has been dispensed. The drive control unit 20B controls the stirring mechanism 10 and thereby stirs the liquid mixture in the reaction vessel. After the liquid mixture has gone through a prescribed reaction time (e.g., ten minutes) in the reaction vessel held on the reaction disk 4, the drive control unit 20B controls the multi-wavelength photometer 12 and thereby measures the absorbance of the liquid mixture. The result of the measurement is input to the storage means 21 via the A/D converter 13. Subsequently, the drive control unit 20B controls the sample dispensing mechanism 6 and thereby dispenses the second standard solution to a reaction vessel 5, the solution corresponding to the reagent stored in the reagent pack 8 which has been carried in. The second standard solution, which may be at a high concentration, for example, has been stored in a sample vessel 3 held on the sample disk 2. Subsequently, the drive control unit 20B controls the reagent dispensing mechanism 9 and thereby dispenses a prescribed amount of the reagent from the reagent pack 8 to the reaction vessel to which the second standard solution has been dispensed. The drive control unit 20B controls the stirring mechanism 10 and thereby stirs the liquid mixture in the reaction vessel. After the liquid mixture has gone through a prescribed reaction time in the reaction vessel held on the reaction disk 4, the drive control unit 20B controls the multi-wavelength photometer 12 and thereby measures the absorbance of the liquid mixture. The result of the measurement is input to the storage means 21 via the A/D converter 13. Subsequently, the calculation unit 20C after reading out the absorbance regarding the first standard solution and the absorbance regarding the second standard solution from the storage means 21 creates the calibration curve by way of connecting the two pieces of data with a straight line and stores the created calibration curve in the storage means 21. While the calibration curve in the above example was created with two types of standard solutions differing in the concentration, the calibration curve may also be created with three or more types of standard solutions differing in the concentration and to make the approximation of three or more absorbance values with a curved line. The calibration curve may be created with two types of standard solutions so as to correct the offset of the calibration curve.

In the case of the measurement of the quality control sample, the drive control unit 20B controls the sample dispensing mechanism 6 and thereby dispenses the quality control sample from a sample vessel 3 held on the sample disk 2 to a reaction vessel 5. Subsequently, the drive control unit 20B controls the reagent dispensing mechanism 9 and thereby dispenses a prescribed amount of the reagent from the reagent pack 8 to the reaction vessel to which the quality control sample has been dispensed. The drive control unit 20B controls the stirring mechanism 10 and thereby stirs the liquid mixture in the reaction vessel. After the liquid mixture has gone through a prescribed reaction time (e.g., ten minutes) in the reaction vessel held on the reaction disk 4, the drive control unit 20B controls the multi-wavelength photometer 12 and thereby measures the absorbance of the liquid mixture. Furthermore, the calculation unit 20C calculates the concentration corresponding to the measured absorbance using the calibration curve obtained in advance as above. The operator can later check whether the accuracy of the automatic analyzer is within a prescribed accuracy range by way of comparing the measured concentration value corresponding to the quality control sample with a concentration value stored in advance in the storage means 21 as the concentration of the quality control sample.

While the calibration is performed first and the measurement of the quality control sample is performed second using the calibration curve obtained from this calibration in the above explanation, it is also possible to first perform the measurement of the quality control sampleusing a calibration curve created for an old reagent. In this case, the step S336 includes only the measurement of the quality control sample (QC measurement).

In cases where the reagent stored in the reagent pack 8 is a standby reagent, the drive control unit 20B controls the reagent pack transfer mechanism 17 and thereby takes out the reagent pack 8 held on the first reagent disk 7 and carries the reagent pack 8 out to the second reagent disk 16.

By returning reagent packs that will not be used immediately to the second reagent disk as above, even when a currently used reagent is used up during the analysis, a necessary reagent pack which has gone through the calibration and the quality control sample measurement and is staying on standby on the second reagent disk can be immediately carried into the first reagent disk, by which the reagent pack can be replaced quickly without stopping the analysis.

Conditions of returning a reagent pack which has gone through the calibration and the quality control measurement from the first reagent disk 7 to the second reagent disk will now be explained.

Basically, the judgment unit 20A in the present embodiment does not allow reagent packs to be carried into the first reagent disk 7 as the main reagent disk, except for currently used reagent packs (current reagent packs). Since information on reagent packs placed on the first reagent disk 7 has been stored in the storage means 21, the judgment unit 20A determines whether the reagent setting positions on the first reagent disk 7 are fully occupied based on the information. When the reagent setting positions are determined to be fully occupied, reagent packs storing reagents for analysis items for which no measurement request has been made are temporarily returned to the second reagent disk 16 as a subsidiary reagent disk. Information on the presence/absence of the measurement request is stored in the storage means 21. Reagent packs of low frequency of use are also temporarily returned to the second reagent disk 16. Information on the frequency of use is also stored in the storage means 21. The reagent packs that should be returned to the second reagent disk 16 due to the low frequency of use may be specified by the operator through the GUI of the display unit 22 in addition to the automatic determination on the frequency of use based on past history records.

When there is a vacant position among the reagent pack setting positions on the first reagent disk 7, the judgment unit 20A performs statistical processing based on past records of use to determine a remaining number of tests, as a threshold value over which a reagent pack should be returned to the second reagent disk 16, in regard to each analysis item. Suppose a reagent pack full of a reagent "a" for an analysis item A can be used for 500 tests and the remaining amount of the reagent "a" in a first reagent pack that has been placed on the first reagent disk 7 corresponds to 20 tests. Meanwhile, it is assumed that the number of requested tests regarding the analysis item A per day is 400 tests in the facility furnished with the automatic analyzer based on the past records of use. In this case, the remaining amount of the first reagent pack (for 20 tests) is insufficient relative to the number of requested tests per day. Thus, if a second reagent pack for the same reagent "a" has gone through the calibration and the quality control measurement, the second reagent pack will be kept on the first reagent disk 7. Supposing a third reagent pack for the same reagent "a" has been placed on the second reagent disk 16 and the third reagent pack has gone through the calibration and the quality control measurement, the third reagent pack will be returned to the second reagent disk since the first and second reagent packs have already been placed on the first reagent disk 7 and the total remaining amount of the first and second reagent packs, corresponding to 520 tests, is greater than the number of tests per day.

The reagent packs which have gone through the calibration and the quality control measurement may also be kept on the first reagent disk 7 or returned to the second reagent disk 16 according to instructions by the operator.

Moreover, it is also possible to keep a reagent pack on the first reagent disk 7 based on information set in advance for each analysis item using the remaining amount management function of the automatic analyzer, or to return a reagent pack to the second reagent disk 16 based on information set in advance for each analysis item using the calibration and the quality control measurement of the automatic analyzer.

After the step S330 is completed, if the calibration and the quality control sample measurement regarding the reagent carried in from the second reagent disk (standby reagent) are determined to be successful, the judgment unit 20A sets the status of the reagent pack to "usable" in step S340.

Subsequently, when the reagent pack is in the state of "in analysis", the analysis is started for a sample in step S350. Specifically, the drive control unit 20B controls each part of the analyzer and thereby performs the dispensing of the sample, dispensing of the reagent, stirring of the liquid mixture, and measurement with the multi-wavelength photometer. The calculation unit 20C calculates the concentration of the sample from the result of the measurement and then analyzes the sample.

When the remaining amount of the currently used reagent pack has reached substantially zero or the reagent has expired, the judgment unit 20A sets the status of the reagent pack to "Do not use" and has the reagent pack carried out to the second reagent disk and discarded through the waste inlet in step S352.

The details of the example of "preparation 1" in Fig. 3 will next be explained below with reference to Fig. 4. Fig. 4 shows an operation example of carrying a reagent pack from the second reagent disk 16 to the first reagent disk 7.

In the first step S400, the drive control unit 20B stays on standby waiting for a reagent loading request. When an instruction like "fixed-time reagent preparation instruction", "manual instruction" or "pre-operation" is issued as indicated above the step S310 in Fig. 3, the reagent loading is started.

Then, the drive control unit 20B controls the second reagent disk 16 and thereby opens the unloading port of the second reagent disk 16. The second reagent disk 16 is formed as a cooling box in order to maintain the quality of the reagents, the reagent packs being stored in the cooling box. Thus, the unloading port is usually closed with a lid to prevent the outflow of cool air from the cooling box and the inflow of warm air to the cooling box. The unloading port is opened only when necessary. Incidentally, the unloading port of the second reagent disk 16 does not have to be formed independently; the second reagent disk 16 may be equipped with a common port usable as both the unloading port and the loading port.

In the next step S410, the reagent pack transfer mechanism 17 under the control of the drive control unit 20B places the reagent pack on the transfer mechanism 17 itself. Then, the unloading port of the second reagent disk 16 is closed.

In the next step S420, the reagent pack transfer mechanism 17 under the control of the drive control unit 20B checks the presence/absence of the reagent pack. The reagent pack transfer mechanism 17 has a gripping mechanism for gripping a reagent pack and checks whether the reagent pack has been gripped properly and has been placed accurately on the transfer mechanism based on the gripping mechanism's open/close position or the like. The judgment unit 20A reads out the information on the reagent pack with the RFID reader 32. The information read out includes the reagent name, the lot number at the time of the production of the reagent, production date, the reagent quantity. There are cases where the gripping of the reagent pack or the reading of the reagent pack information fails. In such cases, the above operation is repeated. While the number of repetitions of the reagent pack presence/absence check and the reagent pack information readout check is set at five times at maximum in this example, the number of repetitions may be set at more or less than five.

After the reagent presence/absence check and the reagent pack information readout are completed, the judgment unit 20A in the next step S430 pairs two or more reagent packs (a first reagent and a second reagent, for example) together for one analysis item (provisional pairing). For example, when a new first reagent (new vessel of the first reagent) is placed on the reagent pack transfer mechanism 17 under conditions where the first reagent and the second reagent with sufficient remaining amounts have been placed on the first reagent disk 7, the judgment unit 20A pairs the first reagent and the second reagent already placed on the first reagent disk. When a new first reagent (new vessel of the first reagent) is placed on the reagent pack transfer mechanism 17 under conditions where only the first reagent has already been placed on the first reagent disk with a sufficient remaining amount while the remaining amount of the second reagent is zero, the judgment unit 20A pairs the new first reagent and the second reagent already placed on the first reagent disk 7. While this paring is done in consideration of conditions such as "same lot > initial registration > expiration date > remaining amount", other conditions may also be used. Although the number of repetitions of the pairing operation is set at five times in this example, the number of repetitions may be set at more or less than five. In step S430, the judgment unit 20A also determines whether the reagent pack placed on the reagent pack transfer mechanism 17 should be transferred to the first reagent disk 7 or returned to the second reagent disk 16, i.e. loading destination of the reagent pack, based on the result of the provisional pairing.

In step S440, the drive control unit 20B performs the loading operation according to the loading destination of the reagent pack determined by the judgment unit 20A in step S430. Specifically, the drive control unit 20B has the reagent pack transferred to the first reagent disk 7 in step S442 or to the second reagent disk in step S444. While the number of repetitions of the loading operation is set at five times in this example, the number of repetitions may be set at more or less than five.

If there are still some reagent packs which need replacing after the loading is completed, the above operation is repeated.

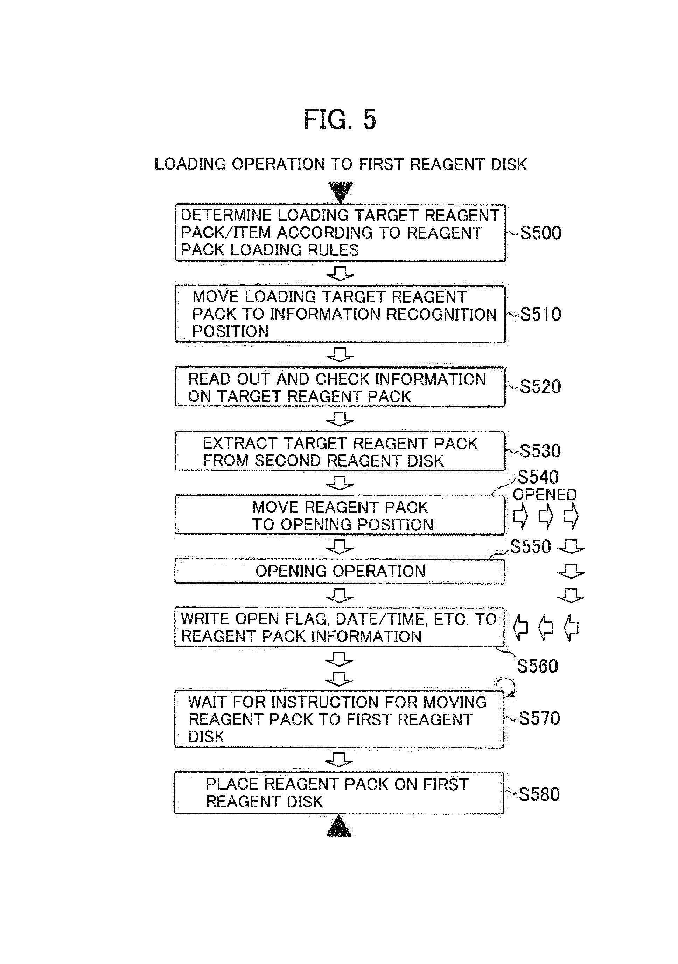

The details of the example of "preparation 2" in Fig. 3 will next be explained below with reference to Fig. 5. Fig. 5 shows the loading operation of a reagent pack to the first reagent disk.

In the first step S500, the judgment unit 20A determines a reagent pack to be loaded and the item (buffer) according to the reagent pack loading rules determined in step S440 in Fig. 4.

In the next step S510, the drive control unit 20B controls the reagent pack transfer mechanism 17 and thereby moves the reagent pack to be loaded to an information identification position (position of the RFID reader 32). In step S520, the judgment unit 20A checks the information on the reagent pack to be loaded based on the reagent pack information read out by the RFID reader 32. In the next step S530, the drive control unit 20B controls the reagent pack transfer mechanism 17 and thereby takes out the target reagent pack from the second reagent disk 16.

In the next step S540, the drive control unit 20B controls the reagent pack transfer mechanism 17 and thereby moves the target reagent pack to the opening position of the opening mechanism 30. After the opening mechanism 30 performed the opening operation in step S550, information such as the opened flag and the opening date/time is written to the reagent pack information stored in the RFID tag attached to the reagent pack using the RFID reader 32 in step S560. The above opening sequence is skipped when the target reagent pack has already been opened.

In the next step S570, the drive control unit 20B waits for an instruction for moving the target reagent pack to the first reagent disk 7. The waiting for the instruction may also be repeated at predetermined intervals.

When the instruction for moving the target reagent pack to the first reagent disk is issued, the drive control unit 20B controls the reagent pack transfer mechanism 17 and thereby places the target reagent pack at a specified position on the first reagent disk 7 in step S580, by which the loading is completed. In the case where the reagent pack has already gone through the calibration and the quality control, information on the calibration and the quality control is also transmitted to the computer 20.

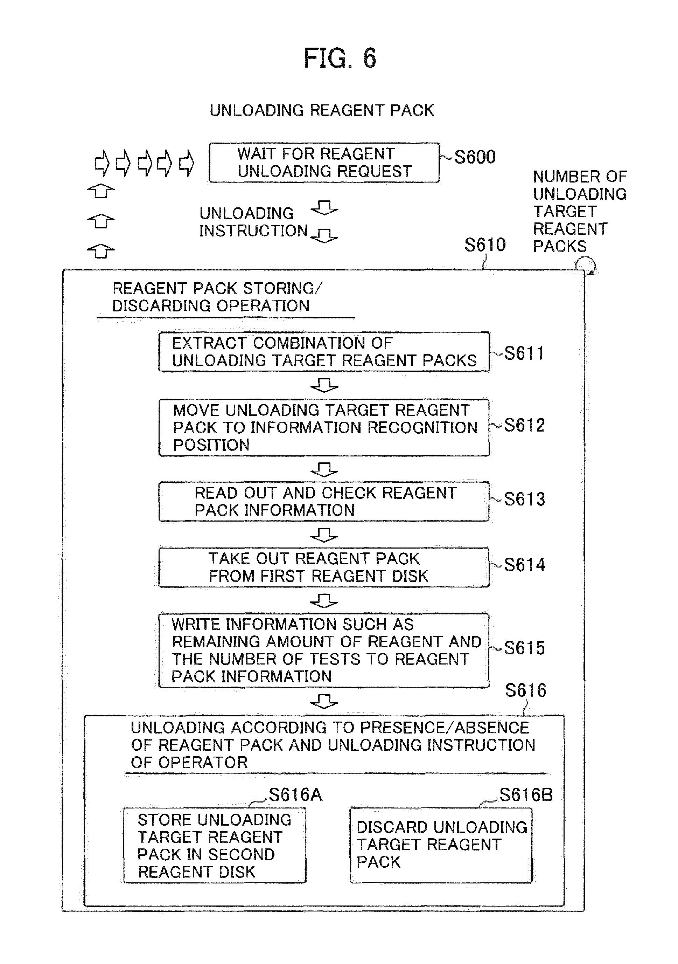

The details of the example of "in analysis" in Fig. 3 will next be explained below with reference to Fig. 6. Fig. 6 shows an operation example of unloading a reagent pack to the second reagent disk.

In step S600, the judgment unit 20A stays on standby waiting for a reagent pack unloading request. The unloading request is issued when the remaining amount of a reagent in a reagent pack on the first reagent disk 7 has reached zero, for example.

Upon receiving the reagent unloading request, the judgment unit 20A stores or discards a reagent pack in step S610. Specifically, in step S611, the judgment unit 20A selects a combination of reagent packs to be unloaded (e.g., first and second reagents). For example, when both of the first and second reagents have expired, both are selected. Even in cases where the first and second reagents started to be used at the same time, the remaining amount of either the first or second reagent will reach zero as long as the amount of use per test differs between the first and second reagents. In this case, the reagent pack whose remaining amount has reached zero is selected as the target for unloading.

In the next step S612, the drive control unit 20B controls the reagent pack transfer mechanism 17 and thereby moves the reagent pack to be unloaded to the reagent pack information identification position and the reagent pack information is read out using the RFID reader 32. In step S613, the judgment unit 20A checks the reagent pack information which has been read out.

In the next step S614, the drive control unit 20B controls the reagent pack transfer mechanism 17 and thereby takes out the target reagent pack from the first reagent disk 7. In step S615, the judgment unit 20A writes information such as the remaining amount of the reagent and the number of valid tests to the reagent pack information stored in the RFID tag attached to the reagent pack using the RFID reader 32.

In the next step S616, in accordance with the presence/absence of a reagent pack and the unloading instruction of the operator, the drive control unit 20B controls the reagent pack transfer mechanism 17 and thereby stores the target reagent pack in the second reagent disk 16 in step S616A or discards the target reagent pack to a reagent pack discarding position in step S616B.

The above sequence from the reagent unloading instruction in step S610 is repeated for the number of the reagent pack to be unloaded. The reagent pack information may be read/written in a different mechanism instead of in the first reagent disk.

As described above, according to the present embodiment, reagents for replacement are preserved on the second reagent disk. The calibration and the quality control sample measurement of the reagent pack to be used next are performed at a specified time or when the analyzer is performing no analysis. Reagent packs that will not be used immediately are returned to the original mechanism for preserving replacement reagents (second reagent disk) and only necessary reagents are kept at the position used for the analysis by the analyzer (first reagent disk). Consequently, high efficiency of the operation and the measurement can be achieved.

For example, in a situation in which a currently used reagent is used up when an operator thoroughly familiar with the maintenance of the analyzer is using the analyzer especially in 24-hour operation, the reagent can be replaced without the manual handling of the operator and without stopping the analysis. Further, by reducing the operator's work for the reagent replacement, the operating efficiency can be improved.

### Reference Numerals

- 1: analyzer
- 2: sample disk
- 3: sample vessel
- 4: reaction disk
- 5: reaction vessel
- 6: sample dispensing mechanism
- 7: first reagent disk
- 8: reagent pack
- 9: reagent dispensing mechanism
- 10: stirring mechanism
- 11: light source
- 12: multi-wavelength photometer
- 13: A/D converter
- 14: reaction vessel cleaning mechanism
- 15: dispensing nozzle cleaning mechanism
- 16: second reagent disk
- 17: reagent pack transfer mechanism
- 18: communication means
- 19: interface
- 20: computer
- 21: storage means
- 22: display unit
- 30: opening mechanism
- 32: RFID reader
- 34: stirring mechanism

## Claims

1. An automatic analyzer comprising:
a sample disk on which sample vessels each storing a sample to be analyzed, a standard solution or a quality control sample are placed;
a first reagent disk on which reagent packs each storing a reagent to be used for a reaction are placed;
a reaction disk on which reaction vessels, in each of which a sample dispensed from a reagent pack on the reagent disk is reacted with a reagent dispensed from a reagent pack on the first reagent disk, are placed;
a photometer which detects light that has passed through the reaction vessel;
a second reagent disk which is provided separately from the first reagent disk and on which reagent packs each storing a reagent to be used for a reaction are placed; and
a reagent pack transfer mechanism which transfers the reagent packs between the first reagent disk and the second reagent disk,
the automatic analyzer performing calibration with a reagent stored in a reagent pack transferred to the first reagent disk and the standard solution and performing quality control measurement with a reagent stored in a reagent pack transferred to the first reagent disk and the quality control sample,
wherein the automatic analyzer comprises a calculation/control unit which opens a reagent pack that has been placed on the second reagent disk and then transfers the reagent pack to the first reagent disk using the reagent pack transfer mechanism, performs at least the quality control measurement, out of the calibration and the quality control measurement, with the reagent stored in the reagent pack transferred to the first reagent disk, and thereafter returns the reagent pack to the second reagent disk using the reagent pack transfer mechanism.

2. The automatic analyzer according to claim 1,
wherein when the judgment unit determines that the remaining amount of a reagent stored in a reagent pack on the first reagent disk has reached zero, the calculation/control unit transfers a reagent pack that has been placed on the second reagent disk, that has already gone through the quality control measurement, and that stores a same type of reagent as the reagent whose remaining amount has reached zero from the second reagent disk to the first reagent disk using the reagent pack transfer mechanism.

3. The automatic analyzer according to claim 2,
wherein the calculation/control unit comprises:
a judgment unit which determines whether reagent setting positions on the first reagent disk are fully occupied; and
a drive control unit which controls the reagent pack transfer mechanism and thereby temporarily returns a reagent pack storing a reagent for an analysis item for which no measurement request has been made to the second reagent disk when the reagent setting positions on the first reagent disk are determined to be fully occupied by the judgment unit.

4. The automatic analyzer according to claim 3,
wherein the drive control unit controls the reagent pack transfer mechanism and thereby temporarily returns a reagent pack storing a reagent for an analysis item for which no measurement request has been made to the second reagent disk when the reagent pack is determined by the judgment unit to be of low frequency of use based on past history records.

5. The automatic analyzer according to claim 3,
wherein when the judgment unit determines that there is a vacant position among the reagent pack setting positions on the first reagent disk, the judgment unit performs statistical processing based on past records of use and thereby determines a remaining number of tests, as a threshold value over which a reagent pack should be returned to the second reagent disk, in regard to each analysis item, and
wherein the drive control unit controls the reagent pack transfer mechanism and thereby temporarily returns a reagent pack storing a reagent for an analysis item for which no measurement request has been made to the second reagent disk based on the determination by the judgment unit.
